# DEMANDE DE BREVET EUROPEEN

(11) **EP 3 034 931 A2**
(43) Date de publication de la demande: **22.06.2016**
(21) Numéro de dépôt: 15198178.4
(22) Date de dépôt: 07.12.2015
(51) Int. Cl.: F21S 8/10, B60Q 1/00

(54) **DISPOSITIF LUMINEUX COMPRENANT DES SOURCES SURFACIQUES DE LUMIÈRE**

(30) Priorité: 19.12.2014 FR 1462929
(71) Demandeur: VALEO VISION, 93012 Bobigny (FR)
(72) Inventeur: ALBOU, Pierre, 75013 PARIS (FR); GODBILLON, Vincent, 75011 PARIS (FR); PUENTE, Jean-Claude, 93190 LIVRY GARGAN (FR)

(57) **Abrégé**

L'invention concerne un dispositif lumineux, notamment d'éclairage et/ou de signalisation, pour véhicule automobile apte à émettre au moins un premier faisceau lumineux et un deuxième faisceau lumineux, le dispositif comprenant une première source surfacique de lumière (1) et une deuxième source surfacique de lumière (2), caractérisé en ce que :
- la première source surfacique est apte à émettre des premiers rayons lumineux (F1) vers la deuxième source surfacique, la deuxième source surfacique étant agencée pour que ces premiers rayons la traversent pour participer au premier faisceau lumineux, et
- la deuxième source surfacique est apte à émettre des deuxièmes rayons lumineux (F2), ces deuxièmes rayons participant au deuxième faisceau lumineux.

## Description

L'invention concerne un dispositif lumineux pour véhicule automobile, apte à émettre au moins un premier faisceau lumineux et un deuxième faisceau lumineux.

Un véhicule automobile doit assurer diverses fonctions d'éclairage et/ou de signalisation et notamment un éclairage de route, un éclairage de croisement, un éclairage anti-brouillard, un éclairage diurne, une signalisation de position, une signalisation de changement de direction, une signalisation de recul, une signalisation de freinage, une signalisation en cas de brouillard. Par ailleurs, il existe également une diversité de fonctions lumineuses que le véhicule doit réaliser au sein même de son habitacle, comme par exemple une liseuse ou un éclairage d'ambiance.

Il est connu d'utiliser des sources de lumière de type surfaciques pour réaliser ces fonctions lumineuses. On entend par « source surfacique » une source présentant une surface d'émission dont la largeur et/ou la longueur est largement supérieure à l'épaisseur de la source, par exemple supérieure à 10 fois l'épaisseur de la source. Ces sources surfaciques permettent d'éviter d'obtenir un aspect visuel ponctuel ou encore linéaire que confèrent des sources de lumière de type généralement ponctuelle comme les LEDs. Par « source de lumière ponctuelle », on entend désigner une source de lumière non étendue, de dimensions petites, voire négligeables, par exemple dont la surface de la zone émettrice de lumière est d'1 mm².

Il est courant de rassembler dans un même dispositif lumineux d'un véhicule plusieurs de ces fonctions lumineuses, que ce soit pour de l'éclairage de la route, de la signalisation du véhicule ou de l'éclairage de l'habitacle. Or, les solutions connues imposent de juxtaposer les sources de lumière réalisant ces fonctions, ce qui pose un problème de compacité du dispositif lumineux dans le cas de sources de lumière de type surfacique.

Il existe ainsi un besoin pour réaliser plusieurs fonctions lumineuses à l'aide d'un même dispositif lumineux qui soit compact et dont l'aspect visuel lorsqu'il est allumé soit surfacique.

L'invention vise ainsi à répondre à ce besoin.

A cet effet, l'invention propose un dispositif lumineux, notamment d'éclairage et/ou de signalisation, pour véhicule automobile apte à émettre au moins un premier faisceau lumineux et un deuxième faisceau lumineux, le dispositif comprenant une première source surfacique de lumière et une deuxième source surfacique de lumière, caractérisé en ce que :
- la première source surfacique est apte à émettre des premiers rayons lumineux vers la deuxième source surfacique, la deuxième source surfacique étant agencée pour que ces premiers rayons la traversent pour participer au premier faisceau lumineux, et
- la deuxième source surfacique est apte à émettre des deuxièmes rayons lumineux, ces deuxièmes rayons participant au deuxième faisceau lumineux.

Si on le souhaite, le dispositif lumineux présente un axe optique, dirigé de l'arrière vers l'avant du dispositif et la première source surfacique est disposée derrière la deuxième source surfacique selon l'axe optique. Dans ce cas, au moins une partie des premiers et des deuxièmes rayons lumineux sont émis par respectivement la première et la deuxième source surfacique selon l'axe optique.

On comprend donc que le dispositif lumineux permet de réaliser deux fonctions lumineuses via une même surface optique étendue et donc d'être compact.

Avantageusement, les premier et deuxième faisceaux lumineux sont émis selon un même axe optique, c'est-à-dire une même direction globale d'émission.

Selon un mode de réalisation de l'invention, la première source surfacique est totalement réfléchissante. Par exemple, la première source surfacique peut présenter une paroi arrière munie d'un revêtement réfléchissant, par exemple en aluminum.

En variante, la première source surfacique peut être semi-réfléchissante. Par exemple la première source surfacique semi-réfléchissante peut être apte à réfléchir uniquement des rayons lumineux de longueur d'onde choisie parmi des premières longueurs d'onde prédéterminées. En d'autres termes, les rayons lumineux de longueur d'onde différente des premières longueurs d'onde prédéterminées peuvent traverser la première source surfacique.

Dans ce cas, la deuxième source surfacique peut être apte à émettre des deuxièmes rayons lumineux vers la première source surfacique, la première source surfacique étant agencée de sorte à réfléchir ces deuxièmes rayons lumineux vers la deuxième source surfacique et la deuxième source surfacique étant agencée de sorte à ce que ces deuxièmes rayons lumineux la traversent pour participer au deuxième faisceau lumineux. Le cas échéant, la deuxième source surfacique est agencée pour émettre des deuxièmes rayons lumineux de longueur d'onde choisie parmi lesdites premières longueurs d'onde prédéterminée.

En variante, la première source surfacique semi-réfléchissante peut être apte à réfléchir une partie seulement, notamment 50%, d'un rayon lumineux l'atteignant, l'autre partie de ce rayon lumineux la traversant.

Selon un autre mode de réalisation de l'invention, la première source surfacique est transparente ou translucide. Avantageusement, le dispositif comprend un réflecteur agencé derrière la première source surfacique.

Dans ce cas, la deuxième source surfacique peut être apte à émettre des deuxièmes rayons lumineux vers la première source surfacique, le dispositif lumineux étant agencé de sorte que lesdits deuxièmes rayons lumineux traversent la première source surfacique, soient réfléchis par le réflecteur et traversent successivement la première source surfacique et la deuxième source surfacique pour participer au deuxième faisceau lumineux.

Selon un mode de réalisation de l'invention, la deuxième source surfacique est transparente ou translucide.

En variante, la deuxième source surfacique peut-être semi-réfléchissante et par exemple apte à réfléchir uniquement des rayons lumineux de longueur d'onde choisie parmi des deuxièmes longueurs d'onde prédéterminées et dans lequel la première source surfacique est agencée pour émettre des premiers rayons lumineux de longueur d'onde différente desdites deuxièmes longueurs d'onde prédéterminée. En variante, la deuxième source surfacique semi-réfléchissante peut être apte à réfléchir une partie seulement, notamment 50%, d'un rayon lumineux l'atteignant, l'autre partie de ce rayon lumineux la traversant.

Avantageusement, la première source surfacique est une diode électroluminescente organique. Par exemple, la première source surfacique peut présenter une structure multicouche comprenant une électrode arrière, une couche organique apte à émettre des premiers rayons lumineux lorsque la première source surfacique est alimentée électriquement et une électrode avant. Les électrodes avant et arrière peuvent être réalisées en un matériau transparent, par exemple en oxyde d'indium-étain (également appelé ITO). Lorsque la première source surfacique est totalement réfléchissante, l'électrode arrière est munie d'un revêtement réfléchissant, par exemple une couche d'aluminium d'épaisseur supérieure à 50 nm, notamment d'épaisseur comprise entre 50 et 100 nm. En variante, l'électrode arrière peut elle même être réalisée dans un matériau réfléchissant. Dans le cas d'une première source surfacique semi-réfléchissante, l'électrode arrière peut être munie d'un revêtement semi-réfléchissant, par exemple une couche d'aluminium d'épaisseur inférieure à 50 nm formant un miroir dichroïque.

Selon une caractéristique de l'invention, la deuxième source surfacique est une diode électroluminescente organique. Lorsque la deuxième source surfacique est transparente ou translucide, les électrodes avant et arrière peuvent être réalisées dans un matériau transparent, par exemple en oxyde d'indium-étain.

En variante, la deuxième source surfacique comporte au moins une source de lumière généralement ponctuelle associée à un guide de lumière surfacique présentant une surface de sortie de lumière, la surface d'émission de la deuxième source surfacique étant formée par la surface de sortie de lumière du guide. Par exemple, le guide de lumière surfacique peut comporter une face d'entrée de lumière en face de laquelle est disposée ladite source de lumière généralement ponctuelle, par exemple une diode électroluminescente, une face de sortie et des faces de guidage. Dans ce cas, le guide de lumière est agencé pour que la lumière émise par la source de lumière généralement ponctuelle pénétrant dans le guide de lumière par la face d'entrée se propage par réflexion interne totale sur les faces de guidage jusqu'à la face de sortie. Le guide de lumière peut être muni d'éléments optiques de découplage agencés de sorte à ce que la lumière se propageant dans le guide de lumière sortent du guide de lumière par la face de sortie pour former lesdits deuxièmes rayons lumineux.

Si on le souhaite, les première et deuxième sources surfaciques sont distantes d'une distance inférieure à 5 millimètres, notamment inférieure à 2 millimètres. Avantageusement,les première et deuxième sources surfaciques sont courbées. Par exemple, les première et deuxième sources surfacique peuvent chacune présenter une forme généralement cylindrique, notamment de directrice, c'est-à-dire de section droite, sensiblement de forme parabolique.

Selon un mode de réalisation de l'invention, le dispositif est apte à émettre un troisième faisceau lumineux. Avantageusement, le dispositif comprend une troisième source de lumière apte à émettre des troisièmes rayons lumineux, ces troisièmes rayons lumineux participant au troisième faisceau lumineux.

Selon une caractéristique de l'invention, la troisième source peut être agencée derrière la première source surfacique et peut être apte à émettre des troisièmes rayons lumineux vers la première source surfacique de sorte à ce que ces troisièmes rayons lumineux traversent successivement la première source surfacique et la deuxième source surfacique pour participer au troisième faisceau lumineux.

En variante, la troisième source est agencée devant la deuxième source surfacique et est apte à émettre des troisièmes rayons lumineux vers la deuxième source surfacique de sorte à ce que ces troisièmes rayons traversent la deuxième source surfacique, soient réfléchis par la première source surfacique et traversent successivement la première source surfacique et la deuxième source surfacique pour participer au troisième faisceau lumineux.

En variante encore, la troisième source est agencée devant la deuxième source surfacique et est apte à émettre des troisièmes rayons lumineux vers la deuxième source surfacique de sorte à ce que ces troisièmes rayons traversent successivement la deuxième source surfacique et la première source surfacique, soient réfléchis par un réflecteur et traversent successivement la première source surfacique et la deuxième source surfacique pour participer au troisième faisceau lumineux.

Si on le souhaite, la troisième source de lumière peut être une troisième source de lumière surfacique, par exemple de type diode électroluminescente organique ou de type guide de lumière. Avantageusement, la troisième source surfacique peut être courbée et présenter une forme similaire à celles des première et deuxième sources surfaciques.

Dans un autre mode de réalisation, la troisième source de lumière peut être une troisième source de lumière généralement ponctuelle. Le cas échéant, la troisième source de lumière peut être disposée au foyer de la directrice parabolique de la première source surfacique et/ou de la deuxième source surfacique.

Eventuellement, le dispositif peut comporter un empilement de sources surfaciques de lumière.

Selon un mode de réalisation de l'invention, la première source lumineuse est agencée pour que le premier faisceau lumineux participe à la réalisation d'une première fonction photométrique réglementaire, par exemple un feu de position. Le cas échéant, la deuxième source lumineuse est agencée pour que le deuxième faisceau lumineux participe à la réalisation d'une deuxième fonction photométrique réglementaire, distincte de la première fonction photométrique réglementaire, par exemple un indicateur de direction.

L'invention sera mieux comprise à l'aide de la description suivante de différentes formes de réalisation de l'invention, en référence aux dessins annexés sur lesquels :
- La figure 1 représente un schéma d'une première forme de réalisation du dispositif optique ;
- La figure 2 représente un schéma d'une deuxième forme de réalisation du dispositif optique ;
- La figure 3 représente un schéma d'une troisième forme de réalisation du dispositif optique.

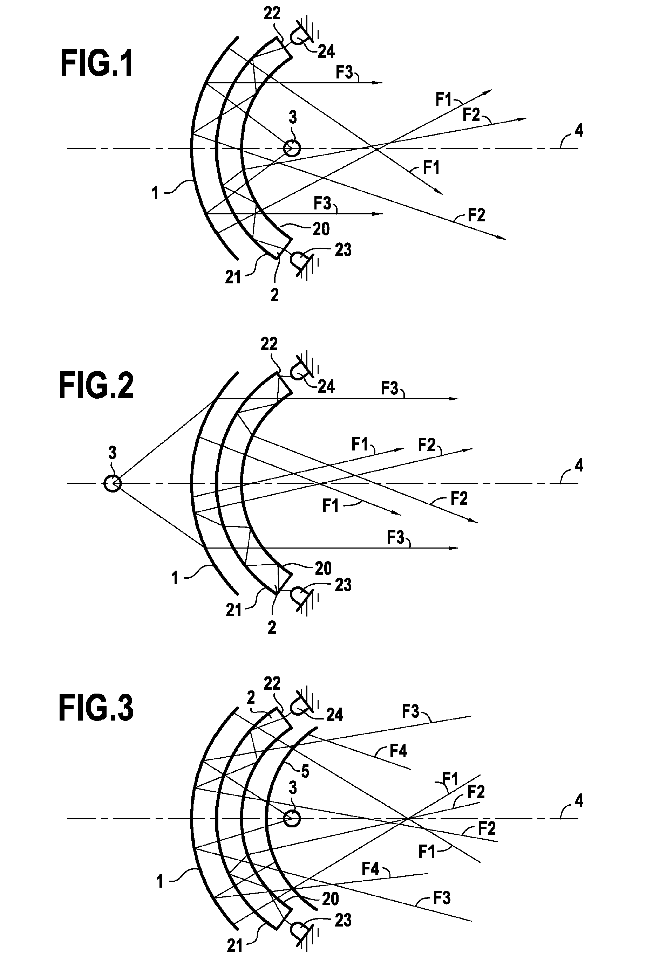

D'emblée, on notera que les éléments correspondants des différentes formes de réalisation portent les mêmes références. L'avant et l'arrière désignent respectivement la droite et la gauche sur les figures 1 à 3.

Sur la figure 1, on a représenté un dispositif optique d'un véhicule automobile, selon une première forme de réalisation de l'invention. Il comprend une première source surfacique de lumière arrière 1, une deuxième source surfacique de lumière avant 2 et une troisième source de lumière ponctuelle 3 disposées le long de l'axe optique 4 du dispositif optique.

Dans la forme de réalisation de la figure 1, la première source surfacique arrière 1 est une diode électroluminescente organique, également appelée OLED (de l'anglais *Organic Light-Emitting Diode*), et la deuxième source surfacique avant comprend un guide de lumière 2 associé à deux sources primaires de lumière généralement ponctuelles 23, 24.

Les deux sources surfaciques 1 et 2 ont globalement la même forme et les mêmes dimensions en hauteur (selon la direction verticale sur la figure 1) et en largeur (selon la direction orthogonale au plan de coupe de la figure 1), comme représenté sur la figure 1. Dans la forme de réalisation de la figure 1, les surfaces des deux sources 1 et 2 sont courbes. Plus précisément ici, les deux sources surfaciques 1 et 2 sont en forme de cylindres dont la section droite serait sensiblement parabolique. Les deux sources surfaciques 1 et 2 sont juxtaposées l'une derrière l'autre, et plus précisément ici empilées, ou emboîtées, l'une dans l'autre, la distance séparant les deux sources étant de l'ordre d'un millimètre.

L'OLED 1 est une OLED réfléchissante et comprend une électrode arrière réfléchissante, une couche organique apte à émettre des premiers rayons lumineux F1 vers le guide de lumière 2 et une électrode avant transparente (non représentées). Les électrodes arrière et avant ainsi que la couche organique s'étendent sur toute la surface de l'OLED 1.

Le guide surfacique de lumière 2 est en matière plastique transparente, en PMMA (polyméthacrylate de méthyle) ou en PC (polycarbonate), d'une épaisseur comprise entre 2 et 10 millimètres. Il comprend un face avant 20 et une face arrière 21 de guidage de la lumière, sensiblement parallèles entre elles, et un pourtour 22 en forme de rectangle s'étendant dans un plan perpendiculaire au plan de coupe de la figure 1. Le pourtour 22 constitue une tranche d'entrée de la lumière.

Les deux sources de lumière généralement ponctuelles primaires 23, 24 sont ici des diodes électroluminescentes, placées au droit de la tranche d'entrée 22 et sont aptes à émettre des rayons lumineux F2. En variante, les diodes 23, 24 pourraient être logées dans des cavités, ou évidements, ménagés en bordure du guide 2, afin d'exploiter au maximum le flux lumineux émis par les diodes 23, 24

Les faces de guidage 20, 21 comportent des éléments optiques de découplage, aptes à dévier une partie des rayons guidés à l'intérieur du guide 2 et à les faire sortir du guide 2 par les faces 20 et 21. Ces éléments de diffusion sont des motifs creux ou saillants diffusants ménagés sur la face avant 20 et/ou arrière 21 du guide 2. Les motifs peuvent par exemple être en forme de prismes creusés dans la surface externe arrière et/ou avant du guide 2. Les dimensions de ces creux sont de surface apparente de 0.1 à 1 ou 2 mm et de profondeur de quelques centièmes de millimètres à un millimètre. Pour davantage de précisions sur de tels éléments optiques de découplage, le lecteur est invité à se reporter au document EP1434000.

La source de lumière ponctuelle 3 est placée sur l'axe optique 4 et émet de rayons lumineux F3 vers le guide de lumière 2.

Lorsque la première source surfacique arrière 1 est mise sous tension, les deux autres sources 2 et 3 étant éteintes, les rayons émis F1 par la source surfacique 1 sont transmis vers l'avant à travers le guide de lumière transparent 2 et réalisent une première fonction photométrique en sortie du guide, par exemple un feu de position.

Lorsque les LEDs 23 et 24 sont mises sous tension, les deux autres sources 1 et 3 étant éteintes, les rayons lumineux F2 émis par chaque diode 23 et 24 pénètrent dans le guide 2 par la tranche d'entrée 22 et se propagent à l'intérieur du guide 2 par des réflexions totales successives sur les faces 20 et 21. Ces réflexions successives sont interrompues lorsque les rayons rencontrent un élément optique de découplage. Ces rayons, après incidence sur un élément optique de découplage, sont réfléchis vers l'une des faces avant 20 ou arrière 21 de sorte à ce qu'ils sortent du guide par cette face. Ainsi, une partie des rayons F2 sortent du guide 2 par les faces de guidage avant 20 et arrière 21, après avoir rencontré un élément de découplage.

Une première partie de ces rayons F2 sortants sortent directement vers l'avant à travers la face de guidage 20. Une deuxième partie de ces rayons F2 sortants sortent vers l'arrière à travers la face de guidage 21 puis sont réfléchis vers l'avant par l'électrode réfléchissante de l'OLED 1 et traversent le guide de lumière 2. Ainsi, la majorité des rayons sortant du guide 2 par les faces avant 20 et arrière 21 réalisent une deuxième fonction photométrique en sortie du guide, par exemple un indicateur de direction.

Lorsque la LED 3 est mise sous tension, les deux sources surfaciques 1 et 2 étant éteintes, des rayons lumineux F3 émis par la LED 3 et impactant le guide surfacique 2 traversent celui-ci puis sont réfléchis vers l'avant par l'électrode réfléchissante de l'OLED 1. Les rayons réfléchis traversent de nouveau le guide surfacique 2 et réalisent ainsi une troisième fonction photométrique en sortie du guide, par exemple un feu de recul. Eventuellement, une partie des rayons lumineux F3 peut être réfléchie vers l'avant par la face 20 ou la face 21 du guide surfacique 2.

Le dispositif optique comprend un module de commande (non représenté) destiné à activer les différentes sources 1, 2 et 3 indépendamment l'une de l'autre de manière à réaliser les trois fonctions photométriques de façon indépendante. En variante, on pourrait prévoir d'activer simultanément au moins deux sources parmi les trois.

Les différentes sources de lumière peuvent émettre des rayonnements de longueurs d'onde respectives différentes et donc de couleurs respectives différentes. En outre, les sources de lumière ponctuelles 23 et 24 associées au guide de lumière 2 peuvent également être de couleurs différentes.

Une deuxième forme de réalisation représentée sur la figure 2 diffère de la première forme de réalisation représentée sur la figure 1 en ce que la source ponctuelle de lumière 3 est placée à l'arrière de la première source surfacique de lumière arrière 1, à gauche de celle-ci sur la figure 2. En outre, la première source surfacique arrière OLED 1 est semi-réfléchissante. Par « semi-réfléchissante », on entend signifier que la source surfacique de lumière 1 présente un revêtement semi-réfléchissant de type dichroïque sur son électrode arrière qui réfléchit seulement certaines longueurs d'onde prédéterminées et laisse passer les autres. Dans la forme de réalisation particulière décrite ici, la première source surfacique arrière 1 est apte à réfléchir la ou les longueurs d'onde, ou la quasi-totalité des longueurs d'onde, émises par la deuxième source surfacique de lumière avant 2 et à laisser passer la ou les longueurs d'onde émise(s) par la LED arrière 3. Par exemple, la LED 3 émet des rayonnements de la longueur d'onde correspondant à la couleur orange et la source surfacique de lumière 1 est apte à laisser passer la longueur d'onde correspondant à la couleur orange et à réfléchir les autres longueurs d'onde.

Dans ce cas, lorsque les deux autres sources 1 et 2 sont éteintes et la source LED 3 est allumée et émet des rayons lumineux F3 de couleur orange vers l'avant, ces rayons, ou la plupart d'entre eux, traversent la première source surfacique arrière 1 puis le guide de lumière avant 2 pour réaliser la troisième fonction photométrique de couleur orange.

Lorsque les LED 23 et 24 sont mises sous tension elles émettent des rayons de lumière blanche F2 qui pénètrent dans le guide surfacique 2 par la tranche d'entrée 22. Une première partie de ces rayons sortent du guide 2 par la face avant 20 et une deuxième partie de ces rayons sortent du guide 2 par la face arrière 21. Les rayons sortant vers l'arrière sont réfléchis sont réfléchis par le revêtement semi-réfléchissant de la source surfacique arrière 1. Une fois réfléchis, les rayons ne contiennent plus la longueur d'onde correspondant à la couleur orange. Toutefois, la lumière réfléchie demeure quasi-blanche. Les rayons ainsi réfléchis traversent le guide de lumière avant 2 pour réaliser la deuxième fonction photométrique de couleur blanche.

Pour réaliser la première fonction photométrique, la source surfacique arrière 1 est mise sous tension, les deux sources 2 et 3 étant éteintes, comme dans la première forme de réalisation.

Une troisième forme de réalisation représentée sur la figure 3 diffère de la première forme de réalisation représentée sur la figure 1 en ce que le dispositif comprend une quatrième source surfacique de lumière 5, placée à entre le guide surfacique de lumière 2 et la LED 3. La source surfacique de lumière 5 est une diode électroluminescente organique transparente, apte à laisser passer les rayons provenant des autres sources de lumière 1, 2 et 3 du dispositif et à émettre des rayons lumineux F4 à la fois vers l'avant et vers l'arrière du dispositif.

Lorsque la première source surfacique arrière 1 est mise sous tension, les autres sources 2, 3 et 5 étant éteintes, les rayons F1 émis par la source OLED 1 sont transmis vers l'avant et traversent successivement le guide de lumière 2 puis la diode électroluminescente organique 5 pour réaliser la première fonction photométrique.

Lorsque les LED 23 et 24 sont mises sous tension, les sources 1, 3 et 5 étant éteintes, les rayons F2 issus des LED 23 et 24 (ou la plupart d'entre eux) se propagent à l'intérieur du guide 2 et une partie d'entre eux sortent du guide 2 par les faces de guidage avant 20 et arrière 21, après avoir rencontré un élément de découplage. Les rayons sortants vers l'arrière sont réfléchis vers l'avant par la source surfacique de lumière 1 et traversent le guide de lumière 2 puis la source surfacique 5 pour réaliser la deuxième fonction photométrique.

Lorsque la LED 3 est mise sous tension, les sources surfaciques 1, 2 et 5 étant éteintes, les rayons F3 impactant la quatrième source surfacique avant 5 traversent celle-ci, puis le guide de lumière 2 puis sont réfléchis par la première source surfacique arrière 1 vers l'avant et traversent de nouveau successivement le guide de lumière 2 puis la quatrième source surfacique avant 5 pour réaliser la troisième fonction photométrique.

Enfin, lorsque la quatrième source surfacique de lumière est mise sous tension, les sources 1, 3 et 23 et 24 étant éteintes, une partie des rayons F4 sont émis vers l'avant et une partie des rayons F4 sont émis vers l'arrière. La partie des rayons F4 émis vers l'arrière traversent le guide de lumière 2 puis sont réfléchis par la première source surfacique arrière 1 vers l'avant et traversent de nouveau successivement le guide de lumière 2 puis la quatrième source surfacique avant 5 pour réaliser la quatrième fonction photométrique.

Bien entendu, l'invention qui a été décrite n'est pas limitée aux exemples de réalisations décrits dans les figures. Les sources surfaciques pourraient être planes ou d'une forme courbe différente, par exemple en forme de portion de sphère. Les sources surfaciques du dispositif pourraient être de formes et/ou dimensions respectives différentes.

On pourrait envisager d'autres formes de réalisation comportant un nombre N de sources surfaciques de lumière juxtaposées l'une derrière l'autre, N pouvant être supérieur ou égal à 3.

## Revendications

1. Dispositif lumineux, notamment d'éclairage et/ou de signalisation, pour véhicule automobile apte à émettre au moins un premier faisceau lumineux et un deuxième faisceau lumineux, le dispositif comprenant une première source surfacique de lumière (1) et une deuxième source surfacique de lumière (2), **caractérisé en ce que** :
- la première source surfacique est apte à émettre des premiers rayons lumineux (F1) vers la deuxième source surfacique, la deuxième source surfacique étant agencée pour que ces premiers rayons la traversent pour participer au premier faisceau lumineux, et
- la deuxième source surfacique est apte à émettre des deuxièmes rayons lumineux (F2), ces deuxièmes rayons participant au deuxième faisceau lumineux.

2. Dispositif lumineux selon la revendication 1, dans lequel la première source surfacique (1) est totalement réfléchissante ou semi-réfléchissante.

3. Dispositif lumineux selon la revendication 2, dans lequel la deuxième source surfacique (2) est apte à émettre des deuxièmes rayons lumineux (F2) vers la première source surfacique (1), la première source surfacique étant agencée de sorte à réfléchir des deuxièmes rayons lumineux vers la deuxième source surfacique et la deuxième source surfacique étant agencée de sorte à ce que ces deuxièmes rayons lumineux la traversent pour participer au deuxième faisceau lumineux.

4. Dispositif lumineux selon la revendication 1, dans lequel la première source surfacique (1) est transparente ou translucide.

5. Dispositif lumineux selon la revendication 4, **caractérisé en ce que** le dispositif comprend un réflecteur agencé derrière la première source surfacique (1).

6. Dispositif selon la revendication 5, dans lequel la deuxième source surfacique (2) est apte à émettre des deuxièmes rayons lumineux (F2) vers la première source surfacique (1), le dispositif lumineux étant agencé de sorte que lesdits deuxièmes rayons lumineux traversent la première source surfacique, soient réfléchis par le réflecteur et traversent successivement la première source surfacique et la deuxième source surfacique pour participer au deuxième faisceau lumineux.

7. Dispositif selon l'une des revendications précédentes, dans lequel la deuxième source surfacique (2) est transparente ou translucide ou semi-réfléchissante.

8. Dispositif lumineux selon l'une des revendications précédentes, dans lequel la première source surfacique (1) est une diode électroluminescente organique.

9. Dispositif lumineux selon l'une des revendications précédentes, dans lequel la deuxième source surfacique (2) est une diode électroluminescente organique.

10. Dispostif lumineux selon l'une des revendications 1 à 8, dans lequel la deuxième source surfacique (2) comporte une source de lumière généralement ponctuelle (23,24) associée à un guide de lumière surfacique (2) présentant une surface de sortie de lumière (20), la surface d'émission de la deuxième source surfacique étant formée par la surface de sortie de lumière du guide.

11. Dispositif selon l'une des revendications précédentes, **caractérisé en ce que** les première (1) et deuxième sources (2) surfacique sont courbées.

12. Dispositif selon la revendication précédente, **caractérisé en ce que** les première (1) et deuxième (2) sources surfacique présentent chacune une forme généralement cylindrique.

13. Dispositif lumineux selon l'une des revendications 1 à 12, le dispositif étant apte à émettre un troisième faisceau lumineux, **caractérisé en ce que** le dispositif comprend une troisième source de lumière (3) apte à émettre des troisièmes rayons lumineux (F3), ces troisièmes rayons lumineux participant au troisième faisceau lumineux.

14. Dispositif lumineux selon la revendication 13, dans lequel la troisième source (3) est agencée derrière la première source surfacique (1) et est apte à émettre des troisièmes rayons lumineux (F3) vers la première source surfacique de sorte à ce que ces troisièmes rayons lumineux traversent successivement la première source surfacique et la deuxième source surfacique (2) pour participer au troisième faisceau lumineux.

15. Dispositif lumineux selon la revendication 13, dans lequel la troisième source (3) est agencée devant la deuxième source surfacique (2) et est apte à émettre des troisièmes rayons lumineux (F3) vers la deuxième source surfacique de sorte à ce que ces troisièmes rayons traversent la deuxième source surfacique, soient réfléchis par la première source surfacique (1) et traversent successivement la première source surfacique et la deuxième source surfacique pour participer au troisième faisceau lumineux
